# EUROPÄISCHE PATENTANMELDUNG

(11) **EP 2 206 972 A2**
(43) Veröffentlichungstag der Anmeldung: **14.07.2010**
(21) Anmeldenummer: 09450227.5
(22) Anmeldetag: 01.12.2009
(51) Int. Cl.: F24D 17/00

(54) **Wärmespeicher**

(30) Priorität: 29.12.2008 AT 20242008
(71) Anmelder: Teufel, Arnold, 6372 Oberndorf (AT)
(72) Erfinder: Teufel, Arnold, 6372 Oberndorf (AT)
(74) Vertreter: Hübscher, Helmut

(57) **Zusammenfassung**

Es wird ein Wärmespeicher mit einem Behälter (1) zur temperaturgeschichteten Aufnahme eines Wärmeträgers und mit einem innerhalb des Behälters (1) vorgesehenen, vom Wärmeträger beaufschlagten Wärmetauscher (2) für Brauchwasser beschrieben, der einerseits einen Kaltwasseranschluss (4) zum Zuführen von zu erwärmendem Brauchwasser und anderseits einen Warmwasseranschluss (5) zur Entnahme des erwärmten Brauchwassers aufweist. Um die Legionellengefahr einzudämmen, wird vorgeschlagen, dass der Kaltwasseranschluss (4) des Wärmetauschers (2) mit einem Legionellenfilter (7) versehen ist.

## Beschreibung

Die Erfindung bezieht sich auf einen Wärmespeicher mit einem Behälter zur temperaturgeschichteten Aufnahme eines Wärmeträgers und mit einem innerhalb des Behälters vorgesehenen, vom Wärmeträger beaufschlagten Wärmetauscher für Brauchwasser, der einerseits einen Kaltwasseranschluss zum Zuführen von zu erwärmendem Brauchwasser und anderseits einen Warmwasseranschluss zur Entnahme des erwärmten Brauchwassers aufweist.

Legionellen vermehren sich in kaltem Wasser kaum und stellen daher im Kaltwasserbereich keine Gefahr dar. Im Warmwasserbereich ist allerdings unter Umständen mit einer starken Vermehrung der Legionellen zu rechnen, sodass insbesondere im Warmwasserbereich die Legionellengefahr zu berücksichtigten ist. Zur Bekämpfung der Legionellen wird im Allgemeinen vorgeschlagen, das Brauchwasser über 57° C zu erwärmen, weil dann die Legionellen absterben. Solche Brauchwassertemperaturen können jedoch nicht immer sichergestellt werden. Eine weitere Möglichkeit zur Vorsorge einer Verseuchung des Trinkwassers mit Legionellen besteht darin, Legionellenfilter einzusetzen. Legionellenfilter sind Ultrafeinfilter mit einer Maschenweite kleiner als 0,03 µm, sodass die Legionellenbakterien zurückgehalten werden. Werden diese Legionellenfilter im Bereich von Hausanschlüssen an das Trinkwassernetz eingesetzt, so besteht die Gefahr, dass sich eingeschleppte Legionellen im Bereich des hausinternen Brauchwassernetzes vermehren. Legionellenfilter an den Entnahmestellen insbesondere des warmen Brauchwassers stellen jedoch einen erheblichen Aufwand dar.

Der Erfindung liegt somit die Aufgabe zugrunde, die Legionellengefahr vor allem im Bereich von Brauchwassernetzen in Einfamilien- und Mehrfamilienhäuser zu vermeiden, die eine Brauchwassererwärmung über einen Wärmespeicher aufweisen.

Ausgehend von einem Wärmespeicher der eingangs geschilderten Art löst die Erfindung die gestellte Aufgabe dadurch, dass der Kaltwasseranschluss des Wärmetauschers mit einem Legionellenfilter versehen ist.

Der Erfindung liegt die Erkenntnis zugrunde, dass sich während der Erwärmung des kalten Brauchwassers für die Legionellenvermehrung günstige Verhältnisse einstellen können, sodass unter der Voraussetzung, dass das Brauchwasser nicht auf die für die Abtötung der Legionellen erforderlichen Temperatur erwärmt wird, vermehrt Legionellen mit dem warmen Brauchwasser ausgetragen werden. Wird daher verhindert, dass Legionellen in den Wärmetauscher zur Erwärmung des Brauchwassers gelangen, so kann darauf verzichtet werden, das Brauchwasser auf eine für die Abtötung der Legionellen erforderliche Mindesttemperatur zu erwärmen, sodass auch Brauchwasser mit niedrigerer Temperatur gezapft werden kann. Dies bringt wirtschaftliche Vorteile mit sich, weil im Allgemeinen die für die Abtötung der Legionellen erforderlichen hohen Temperaturen nicht erforderlich sind. Aus diesem Grund schützt ein mit einem Legionellenfilter versehener Kaltwasseranschluss des im Wärmespeicher vorgesehenen Wärmetauschers zum Erwärmen des Brauchwassers das entnommene Warmwasser vor einer Verseuchung mit Legionellen.

Besonders einfache Konstruktionsverhältnisse ergeben sich in diesem Zusammenhang, wenn das Legionellenfilter ein wasserdicht an eine Behälteröffnung angeschlossenes topfartiges Gehäuse und eine durch die Behälteröffnung in das verschließbare Gehäuse auswechselbar eingesetzte Filterpatrone umfasst. Diese Filterpatrone kann somit im Bedarfsfall ohne Schwierigkeiten ausgewechselt werden, weil zu diesem Zweck lediglich das Gehäuse des Legionellenfilters geöffnet werden muss, um die Filterpatrone entnehmen und gegebenenfalls durch eine neue auszutauschen. Die Kaltwasserzufuhr zum Gehäuse des Legionellenfilters und die weiterleitende Verbindung zum Wärmetauscher brauchen hiefür nicht gelöst zu werden.

Vorteilhafte Strömungsverhältnisse ergeben sich, wenn der Kaltwasseranschluss am Mantel und der Wärmetauscheranschluss an der ins Behälterinnere weisenden Stirnwand des topfartigen Gehäuses des Legionellenfilters angesetzt sind, weil in diesem Fall das Kaltwasser über den Mantel der Filterpatrone in das gegen die Stirnwand des topfartigen Gehäuses offene Patroneninnere strömt. Eine solche Leitungsführung macht aber auch eine Rückspülung des Legionellenfilters vergleichsweise einfach, weil ja lediglich zwischen dem Kaltwasseranschluss und dem Wärmetauscheranschluss eine Spülleitung vorzusehen und an das Gehäuse eine Ableitung für das Rückspülwasser anzuschließen ist. Über entsprechende Schalt- bzw. Umschaltventile kann somit die Filterpatrone durch ein Rückspülen zumindest teilweise gereinigt werden, wobei das Spülwasser zu verwerfen ist.

Wird in herkömmlicher Weise die Temperatur des erwärmten Brauchwassers durch ein Mischventil in der Brauchwasserleitung eingestellt, dem Kaltwasser zugeführt wird, so könnten über die an das Mischventil angeschlossene Kaltwasserleitung Legionellen in die Brauchwasserleitung eingeschleppt werden. Um dies zu vermeiden, kann im Anschluss an das Legionellenfilter vom Wärmetauscheranschluss eine Kaltwasserleitung für ein Mischventil in der Leitung für das erwärmte Brauchwasser abgezweigt werden, wodurch ein Verschleppen der Legionellen in die Leitung für das erwärmte Brauchwasser sicher unterbunden wird.

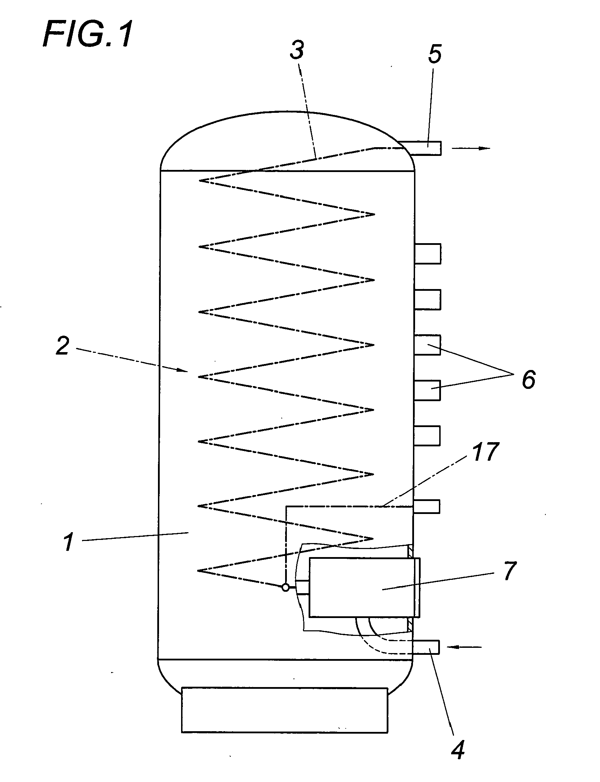

In der Zeichnung ist der Erfindungsgegenstand beispielsweise dargestellt. Es zeigen
- Fig. 1: einen erfindungsgemäßen Wärmespeicher in einer schematischen, zum Teil aufgerissenen Seitenansicht und
- Fig. 2: einen Schnitt durch das Legionellenfilter im Bereich des Kaltwasseranschlusses in einem größeren Maßstab.

Der Wärmespeicher weist gemäß dem dargestellten Ausführungsbeispiel einen Behälter 1 zur Aufnahme eines Wärmeträgers auf, mit dessen Hilfe das Brauchwasser über einen Wärmetauscher 2 erwärmt werden kann. Dieser Wärmetauscher 2 besteht vorzugsweise aus einer um die Behälterachse schraubenförmig gewundenen Rohrschlange 3, die im Bodenbereich des Behälters einen Kaltwasseranschluss 4 und im Deckenbereich des Behälters 1 einen Warmwasseranschluss 5 zur Entnahme des erwärmten Brauchwassers aufweist. Der Wärmespeicher wird in herkömmlicher Weise über wenigstens einen Ladekreis geladen, der üblicherweise einen Wärmetauscher für den Wärmeträger umfasst und so ausgelegt wird, dass bei der Ladung des Wärmespeichers die Temperaturschichtung des Wärmeträgers im Behälter 1 möglichst nicht beeinträchtigt wird. Außerdem kann an den Wärmespeicher wenigstens ein Verbraucherkreis, beispielsweise ein Heizkreis, angeschlossen sein. Der Behälter 1 ist zu diesem Zweck mit mehreren über seine Höhe verteilten Anschlussstutzen 6 versehen.

Zum Unterschied zu bekannten Wärmespeichern dieser Art weist der darin befindliche Wärmetauscher 2 für das Brauchwasser im Bereich des Kaltwasseranschlusses 4 ein Legionellenfilter 7 auf, das das Eintragen von Legionellen in den Wärmetauscher 2 über die an den Kaltwasseranschluss 4 angeschlossene Kaltwasserleitung unterbindet. Dies bedeutet, dass die am Warmwasseranschluss 5 messbare Austrittstemperatur des erwärmten Brauchwassers nicht die für die Abtötung von Legionellen erforderliche Mindesttemperatur aufzuweisen braucht, sodass der Wärmespeicher ohne Rücksicht auf diese Mindesttemperatur in wirtschaftlicher Weise entsprechend den jeweiligen Anforderungen an die Brauchwassertemperatur betrieben werden kann.

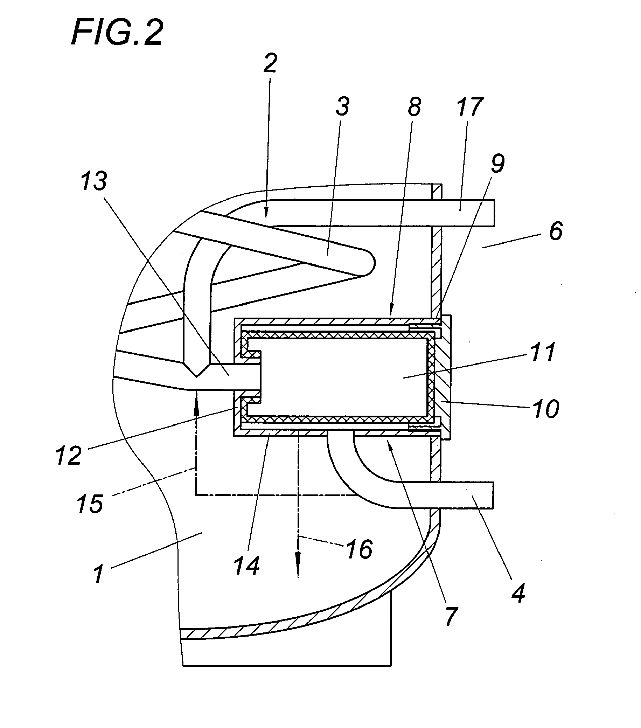

Wie der Fig. 2 zu entnehmen ist, umfasst das Legionellenfilter 7 ein topfartiges Gehäuse 8, das wasserdicht in eine Behälteröffnung 9 eingesetzt und mit einem Deckel 10 verschließbar ist. Dieses Gehäuse 8 nimmt eine Filterpatrone 11 auf, die bei geöffnetem Deckel 10 in das Gehäuse 8 eingesetzt werden kann, das an der ins Behälterinnere weisenden Stirnwand 12 einen Wärmetauscheranschluss 13 für das die Filterpatrone 11 durchsetzende kalte Brauchwasser bildet, das über den Kaltwasseranschluss 4 durch den Mantel 14 des Gehäuses 8 der Filterpatrone 11 zugeführt wird.

Um das Legionellenfilter 7 reinigen zu können, kann in an sich bekannter Weise eine Rückspülung vorgesehen werden, indem der Kaltwasseranschluss 4 mit dem Wärmetauscheranschluss 13 durch eine Spülleitung 15 verbunden wird, die wie die Ableitung 16 für das Spülwasser aus dem Gehäuse 8 lediglich strichpunktiert angedeutet ist. Die für das Rückspülen erforderlichen Schaltventile sind aus Übersichtlichkeitsgründen nicht dargestellt.

Üblicherweise sind in der an den Warmwasseranschluss 5 anschließenden Leitung für das erwärmte Brauchwasser Mischventile vorgesehen, um für die einzelnen Zapfstellen eine einstellbare Warmwassertemperatur zu ermöglichen. Um zu verhindern, dass über die mit diesen Mischventilen verbundenen Kaltwasserleitungen Legionellen in den Warmwasserbereich eingeschleppt werden, kann im Anschluss an das Legionellenfilter 7 vom Wärmetauscheranschluss 13 eine Kaltwasserleitung 17 abzweigen, sodass das den Mischventilen zugeführte Kaltwasser legionellenfrei ist.

## Patentansprüche

1. Wärmespeicher mit einem Behälter (1) zur temperaturgeschichteten Aufnahme eines Wärmeträgers und mit einem innerhalb des Behälters (1) vorgesehenen, vom Wärmeträger beaufschlagten Wärmetauscher (2) für Brauchwasser, der einerseits einen Kaltwasseranschluss (4) zum Zuführen von zu erwärmendem Brauchwasser und anderseits einen Warmwasseranschluss (5) zur Entnahme des erwärmten Brauchwassers aufweist, **dadurch gekennzeichnet, dass** der Kaltwasseranschluss (4) des Wärmetauschers (2) mit einem Legionellenfilter (7) versehen ist.

2. Wärmespeicher nach Anspruch 1, **dadurch gekennzeichnet, dass** das Legionellenfilter (7) ein wasserdicht an eine Behälteröffnung (9) angeschlossenes, topfartiges Gehäuse (8) und eine durch die Behälteröffnung (9) in das verschließbare Gehäuse (8) auswechselbar eingesetzte Filterpatrone (11) umfasst.

3. Wärmespeicher nach Anspruch 2, **dadurch gekennzeichnet, dass** der Kaltwasseranschluss (4) am Mantel (14) und der Wärmetauscheranschluss (13) an der ins Behälterinnere weisenden Stirnwand (12) des topfartigen Gehäuses (8) des Legionellenfilters (7) angesetzt sind.

4. Wärmespeicher nach einem der Ansprüche 1 bis 3, **dadurch gekennzeichnet, dass** im Anschluss an das Legionellenfilter (7) vom Wärmetauscheranschluss (13) eine Kaltwasserleitung (17) für zumindest ein Mischventil in der Leitung für das erwärmte Brauchwasser abzweigt.
